# EUROPEAN PATENT APPLICATION

(11) **EP 2 746 989 A2**
(43) Date of publication of application: **25.06.2014**
(21) Application number: 13196028.8
(22) Date of filing: 06.12.2013
(51) Int. Cl.: G06K 9/00

(54) **Document processing device, image processing apparatus, document processing method and computer program product**

(30) Priority: 07.12.2012 JP 2012267869
(71) Applicant: Ricoh Company, Ltd., Tokyo 143-8555 (JP)
(72) Inventor: Ohguro, Yoshihisa, Ohta-ku, Tokyo 143-8555 (JP)
(74) Representative: Maury, Richard Philip

(57) **Abstract**

A document processing device (1) includes: a character information extracting unit (13) that extracts character information from document image data; a feature character string extracting unit (14) that extracts, as document name candidate character strings, a given number of character strings indicative of features of the document image data from the character information extracted by the character information extracting unit (13); an output condition acquiring unit (15) that, when the document image data is processed by one of multiple processing methods involving an output of a document name of the document image data, acquires an output condition required for the output of the document name of the document image data; and a document name generating unit (15) that generates the document name complying with a character condition corresponding to the output condition from the document name candidate character strings.

## Description

### CROSS-REFERENCE TO RELATED APPLICATIONS

The present application claims priority to and incorporates by reference the entire contents of Japanese Patent Application No. 2012-267869 filed in Japan on December 7, 2012.

### BACKGROUND OF THE INVENTION

### 1. Field of the Invention

The present invention relates to a document processing device, an image processing apparatus, a document processing method and a computer program product and, more specifically, relates to a document processing device, an image processing apparatus, a document processing method and a computer program product that create, for document image data, a document name in a style appropriate to the output conditions when the document image data is output and in the destination to which the document image data is output.

### 2. Description of the Related Art

Externally loaded document image data includes document image data that is given no document name and, particularly, document image data loaded from paper documents by a scanning device is required to be given a document name for storage management so that the document data can be more effectively used.

There is a conventional method of giving document names to such loaded image data wherein loading dates, predetermined serial numbers, etc. are automatically created and given. However, there is a problem in that the document content of document image data cannot be determined only from the dates or serial numbers, which leads to poor usability of the document image data.

Conventionally, a user inputs a document name corresponding to the content of the loaded document image data to the document image data. This allows other users to know the content of the document image data from the document name, which increases its usability. However, operability is reduced if there is a large amount of document image data, and this situation requires improving.

Consequently, various techniques to extract a title corresponding to the content of document image data from the document image data itself have been proposed. For example, there is a method of extracting the feature amount of each candidate title sentence from a document that is scanned by performing optical character recognition (OCR) on the document image data and then extracting a title such that the feature amount includes similarity information that is a function of the similarity of the candidate title sentence with respect to multiple sentences in the document (see Patent Document 1); there is also a method of extracting a title by extracting layout likeness from character area properties and line area layout features of document image data (see Patent Document 2); and there is also a method of extracting a title from information on the relative positions between a keyword character string and a title character string shown near the title character string (see Patent Document 3).

Each of the above conventional techniques is a technique where a character string that is extracted from the document image data is suitable as a title (document name) for the content of the document image data; however, the output destination device to which the extracted document name is to be output is not taken into consideration, which means that improvements are required.

Document image data is stored and used by various devices or transferred and used by using various types of software, and a document name is given so as to specify the document image data on the basis of the document name, thereby improving usability of the document image data.

However, there are various limitations on outputting a document name as displayed or recorded, e.g., the character code may differ depending on the device, software for outputting document image data by transfer, etc., there may be a limitation on the data volume that can be transmitted in one transmission, or there may be a limitation on the number of characters in a document name. Thus, given characters of the document name may become corrupted and may not be accurately output or an intended document name may not be output, and thus improvements in giving document names are required.

There is a need to create a document name representing the content of document image according to a document name output condition.

### SUMMARY OF THE INVENTION

It is an object of the present invention to at least partially solve the problems in the conventional technology.

A document processing device includes: a character information extracting unit that extracts character information from document image data; a feature character string extracting unit that extracts, as document name candidate character strings, a given number of character strings indicative of features of the document image data from the character information extracted by the character information extracting unit; an output condition acquiring unit that, when the document image data is processed by one of multiple processing methods involving an output of a document name of the document image data, acquires an output condition required for the output of the document name of the document image data; and a document name generating unit that generates the document name complying with a character condition corresponding to the output condition from the document name candidate character strings.

A document processing method includes steps of: a character information extracting processing of extracting character information from document image data; a feature character string extracting processing of extracting, as document name candidate character strings, a given number of character strings indicative of features of the document image data from the character information that is extracted at the character information extracting processing step; an output condition acquiring processing of, when the document image data is processed by one of multiple processing methods involving an output of a document name of the document image data, acquiring an output condition required for the output of the document name of the document image data; and a document name generating processing of generating the document name complying with a character condition corresponding to the output condition from the document name candidate character strings.

A computer program product includes a non-transitory computer-usable medium having computer-readable program codes embodied in the medium. The program codes when executed cause a computer to execute: a character information extracting processing of extracting character information from document image data; a feature character string extracting processing of extracting, as document name candidate character strings, a given number of character strings indicative of features of the document image data from the character information that is extracted by the character information extracting processing; an output condition acquiring processing of, when the document image data is processed by one of multiple processing methods involving an output of a document name of the document image data, acquiring an output condition required for the output of the document name of the document image data; and a document name generating processing of generating the document name complying with a character condition corresponding to the output condition from the document name candidate character strings.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a main unit block configuration diagram of a document processing device to which one embodiment of the present invention is applied;
FIG. 2 is a block configuration diagram of a document name creation unit;
FIG. 3 is a flowchart of basic document processing;
FIG. 4 is a diagram of an exemplary output destination specifying screen for each outputting method;
FIG. 5 is a flowchart of a document name generating process for sending email;
FIG. 6 is a main unit block configuration diagram of a computer device that performs document processing; and
FIG. 7 is a schematic configuration diagram of a document processing system where multiple devices share document processing.

### DETAILED DESCRIPTION OF THE PREFERRED EMBODIMENTS

Preferred embodiments of the present invention will be described in detail below with reference to the accompanying drawings. While the embodiments described below are preferred embodiments of the present invention and accordingly technically preferred various limitations are put thereon, the scope of the invention is not unduly limited by the following descriptions and furthermore not all the components described in the embodiments are essential components of the invention.

### First Embodiment

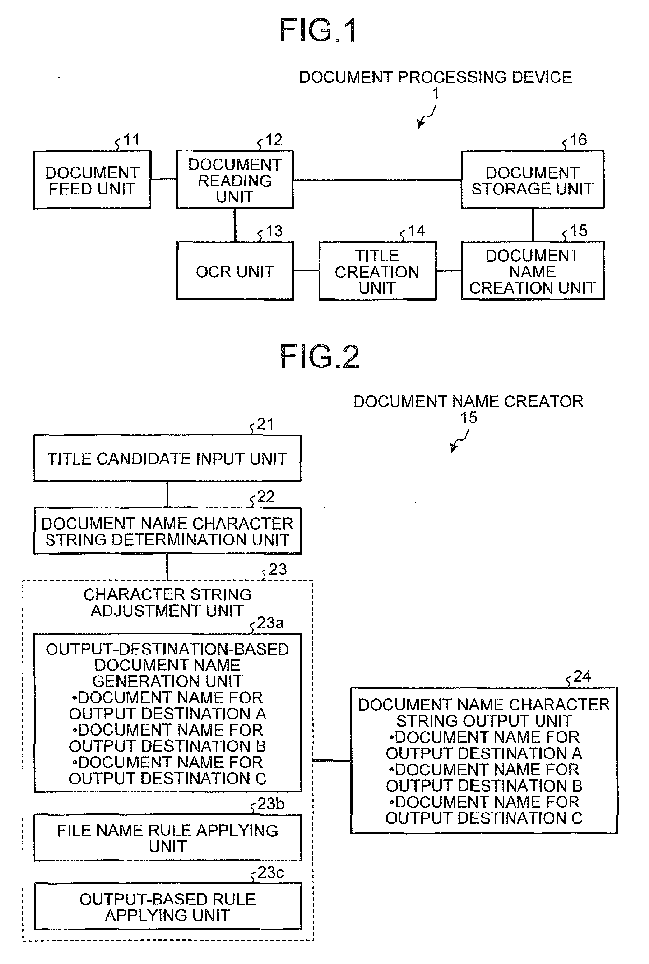

FIGS. 1 to 7 are diagrams of an embodiment of a document processing device, an image processing apparatus, a document processing method and a document processing program of the invention. FIG. 1 is a main unit block diagram of a document processing device 1 that applies to an embodiment of the document processing device, image processing apparatus, document processing method and document processing program of the invention.

The document processing device 1 shown in FIG. 1 is used by various devices that deal with document image data, such as a copying device, a composite device, a scanning device, a computer device, and a book reader. At least a document processing program for implementing the document processing method of the present invention is loaded into a non-volatile memory of the document processing device 1 and is executed by a control processor, such as a central processing unit (CPU) so that a document feed unit 11, a document reading unit 12, an OCR unit 13, a title creation unit 14, a document name creation unit 15, a document storage unit 16, etc., are created.

In other words, the document processing device 1 is created as a document processing device that implements a document processing method where the character code for the document name representing the content of the loaded document image data to be described below is set according to the output conditions. The document processing method is further implemented by reading a document processing program for implementing the document processing method of the invention and loading the program into a non-volatile memory, such as a ROM or a hard disk, which is a document processing program stored in a computer-readable storage medium, such as a ROM, an electrically erasable and programmable read only memory (EEPPROM), an EPROM, a flash memory, a flexible disk, a compact disc read only memory (CD ROM), a compact disc rewritable (CD-RW), a digital versatile disk (DVD), a secure digital (SD) card, or a magneto-optical disc (MO). The document processing program is a computer-executable program that is written in a legacy programming language or object-oriented programming language, such as an assembler, C, C++, C#, JAVA (trademark), and it can be stored in the above-listed recording media and distributed.

Multiple paper documents can be placed on the document feed unit 11, and the document feed unit 11 sends the placed paper documents one by one to the document reading unit 12.

For the document reading unit 12, for example, an image scanner using a charge coupled device (CCD) or a complementary metal oxide semiconductor (CMOS) is used. The document reading unit 12 performs main scanning and sub scanning on the paper document sent from the document feed unit 11, reads the image on the paper document at a given resolution, binarizes the image, and sends it to the document storage unit 16 and the OCR unit 13.

The OCR unit 13 reads character data from the image data of the paper document that is read by the document reading unit 12, adds additional information, such as the character image position, character recognition score, and the language processing result (the position of the word to which the character belongs and grammatical information such as the part of speech), to the character data and sends it to the title creation unit 14. In other words, the OCR unit 13 functions as a character information extracting unit that extracts character information from document image data that is loaded by the document reading unit 12, document image data that is loaded from a network-connected different device, etc.

While the document processing device 1 of the embodiment loads document image data by reading paper documents with the document reading unit 12, the method of loading document image data is not limited to the above method. For example, the document processing device 1 may load document image data by receiving it via a network and a network I/F from a scanning device that reads paper document, from a copying device that stores document image data, from a composite device, from a computer device, etc.

The title creation unit 14 extracts, on a page-by-page basis, a text that distinctively represents the content of the page of document image data (hereinafter, "title character string") from character data and additional information that are input from the OCR unit 13 and outputs the text to the document name creation unit 15.

In other words, the title creation unit 14 functions as a feature character string extracting unit that extracts, as title character strings (document name candidate character string), a predetermined number of strings indicative of the features of the document image data from the character data, which is character information and is extracted by the OCR unit 13, and additional information.

A conventional title extracting method, such as the method described in the above patent documents may be used by the title creation unit 14 to extract a title. For example, the title creation unit 14 may use a method of determining a title likeness or caption likeness with reference to text present position information of the additional information from the OCR unit 13 by using the fact that the title or caption of the page exists on the upper part of the page if the title or caption consists of horizontal large characters, or the fact that the title or caption exists on the right of the page if the title or caption consists of vertical large characters; a method where, because text that includes a word, which has a meaning rather than being a meaningless character string, is useful in many cases, texts obtained by OCR are grammatically analyzed and a text with less grammatical deviation is used; a method of generally evaluating multiple elements, such as text position information and grammatical analysis results, and creating a short text simply representing the page. The title creation unit 14 performs the feature character string extracting process on the document image data on a page-by-page basis.

The title creation unit 14 of the embodiment creates, as a title character string, a document name candidate character string by basically using the character code of the character string acquired by the OCR processing performed by the OCR unit 13.

The document name creation unit 15 sets character conditions, e.g., a character string and a character code, appropriately to the output conditions when the document image data is output and in the destination to which the document image data is output, creates a document name from the title character strings created by the title creation unit 14, and outputs the document name to the document storage unit 16. In other words, the document name creation unit 15 functions as a document name generating unit that sets character conditions, e.g., a character string and a character code, appropriately to the output conditions when the document image data is output and in the destination to which the document image data is output and creates a document name from the title character string extracted by the title creation unit 14.

The document storage unit 16 includes a large-capacity non-volatile memory, such as a hard disk. The document storage unit 16 stores and manages the document image data, which is input from the document reading unit 12, and the document name, which is created by the document name creation unit 15, in the non-volatile memory in association with each other.

As described above, the document processing device 1 is applied to an image processing apparatus, such as scanning, copying, and multifunction devices. In response to an operation by the user on the operation display unit of the image processing apparatus, the document processing device 1 outputs the document names of document image data, which are stored in the document storage unit 16, as displayed on the display of the operation display unit. When the user understands what the content is of the document image data from the document names displayed on the display and operates the operation display unit to select document image data of a chosen document name, the image processing apparatus outputs the selected document image data in an output style corresponding to the operation on the operation display unit, such as display output, print output, transfer output to a different device, email output as an attachment document attached to an email and sent to a different device, or electric medium writing output, which is writing output to an electric medium, such as Universal Serial Bus (USB) or an SD card, such that the document image data can be searched and used in the output destination with reference to the document name.

However, for outputting of document image data and a document name that is performed by the document processing device 1, the conditions for outputting document image data and document name, e.g., a character code or the number of characters, in the document processing device 1 may vary depending on the output destination device or software (e.g., email software) that is used for the outputting. In such a case, if character corruption occurs and a document name cannot be output accurately or if the number of characters is limited to being a number smaller than that the number of characters in the generated document name, the intended document name cannot be output. As a result, the document name may not be used or its usability may be impaired.

Thus, the document name creation unit 15 of the document processing device 1 of the embodiment includes, as shown in FIG. 2, a title candidate input unit 21, a document name character string determination unit 22, a character string adjustment unit 23, and a document name character string output unit 24. The document name creation unit 15 sets a document name character code on the basis of the output conditions.

A title character string is input from the title creation unit 14 to the title candidate input unit 21, and the title candidate input unit 21 inputs the title character string to the document name character string determination unit 22.

From among the title character strings input from the title candidate input unit 21, the document name character string determination unit 22 selects a document name candidate character string that substantially represents the content of the document image data.

The character string adjuster 23 includes an output-destination-based document name generation unit 23a, a file name rule applying unit 23b, and an output-based rule applying unit 23c. The character string adjustment unit 23 adjusts characters of the same meaning into a character code and the number of characters so as to comply with the output conditions.

The output-based rule applying unit 23c previously sets and registers character string adjusting rules corresponding to various destinations to which document image data is output. The document processing device 1 outputs the document image data by using an outputting method, such as folder transmission where the document image data is transferred, for example, to a different device via a wired or wireless network and stored in a folder of the storage unit of the device; email sending where the document image data is attached as an attachment document and sent by email to a different device by using server message block (SMB); electric medium writing output where the document image data is written to an electric medium, such as an universal serial bus (USB) or an SD memory, that is detachably attached to the document processing device 1; or print output or display output to the display unit by the image processing apparatus. The outputting method using folder transmission and main transmission has to take into consideration which character code is usable in the output destination device in order to properly output the document name. In contrast, because electric medium writing output is writing to an electric medium attached to the document processing device 1 and thus the process ends in the document processing device 1, it is not necessary to take the character code into consideration.

The output rule applying unit 23c previously stores, as a character string adjusting rule, a character code usable in the output destination devices for which the outputting method is specified as folder transmission and email transmission. If the outputting method is folder transmission or email transmission, the output-destination-based document name generation unit 23a acquires a character code that is usable in the output destination device from the output rule applying unit 23c and sets the character code usable in the output destination as the document name character code. Particularly, when characters usable in the output destination device are unknown, the output-destination-based document name generation unit 23a sets to character code the ASCII code, which can be output by every device.

When the outputting method is electric medium writing, the output rule applying unit 23c previously stores various character codes as the character string adjusting rule so that the character code that is acquired by OCR processing can be applied. If the outputting method is electric media writing, the output-destination-based document name generation unit 23a acquires the character code acquired by OCR processing from the output rule applying unit 23c and sets this character code as the document name character code.

In other words, if the output destination device is capable of displaying only Western languages and the output destination device is caused to display the document name in Japanese SJIS, an SJIS character string where one character is represented by 2 bytes is displayed as a 1-byte symbol string that is meaningless in this context and the document name cannot be displayed properly due to such character corruption. If the output destination device is a device capable of displaying Japanese SJIS code and the document processing device 1 transmits a Spanish document name "téléphone" including e-acute, the character is corrupted to something like "t 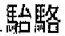 hone" and the document name cannot be displayed properly. Such Spanish character corruption occurs because e-acute (0xE9) corresponds to the SJIS first byte and the following 1 (0xE9) and e (0xE9) are the SJIS second byte and el (0xE9 0x6C) is converted to " 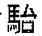 ", and ep (0xE9 0x70) is converted to " 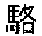 " according to SJIS kanji characters.

The file name rule applying unit 23b stores prohibition rules for performing a process for imposing a regulation on, if used in a document name, misidentification of a document name by the output destination device and limiting the character string.

For example, while SJIS is used by default in MS-DOS (Trademark), SJIS uses " 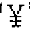 " as the second byte in some cases like a kanji character " 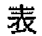 ", a katakana character " 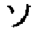 ", etc. However, because " 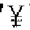 " is used as a pass breaker, etc. in Windows (Trademark), if " 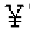 " is used in a document name, a problem occurs in that it is misidentified as the break in a path and the path is broken where a break is not intended. In other words, if the document name contains " 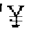 ", the document processing device may take it as a non-existing sub directory, leading to an incorrect document name and causing the outputting process to fail. For example, Windows prohibits the use of 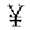 , /, :, *, ?, ", <, > and | in document names (file name).

The file name rule applying unit 23b thus previously stores characters and symbols that are prohibited for use in document names as prohibited characters/symbols.

If a prohibited character/symbol that is stored in the file name rule applying unit 23b is contained in a document name candidate character string that is passed from the document name character string determination unit 22, the output-destination-based document name generation unit 23a prohibits the use of the character/symbol and automatically replaces it with a proper, different character that is not prohibited or notifies the user of the fact and causes the user to change the character/symbol to a different one.

The operating system (OS) of the device imposes a limitation on the length of a file name and a document name exceeding that length cannot be used.

The file name rule applying unit 23b previously stores a regulation character string length that regulates the length of a character string serving as a document name.

If the document name candidate character string that is passed from the document name character string determination unit 22 exceeds the regulation character string length stored in the file name rule applying unit 23b, the output-destination-based document name generation unit 23a regulates it such that it becomes the regulation character string length. Specifically, the output-destination-based document name generation unit 23a prohibits using such a character string, automatically cuts off the last part of the document name candidate character string so that it becomes the regulation character string length, and notifies the user of the fact, requesting the user to change the character string to a document name consisting of a character string having the regulation character string length.

Furthermore, regarding email transmission, a limitation may be imposed on the data size of an attachment document depending on the software or the receiving device.

In such a case, the document processing device 1 splits the document image data to be transmitted into multiple sets of split document image data and transmits them by e-mail and the receiving device restores the sets of split document image data to a single set of document image data.

However, when such sets of split document image data are transmitted by multiple emails and if the sets of split document image data that are attachment documents are respectively given different document names and transmitted, the receiving device has a difficulty in identifying the relationship between the split document image data when restoring the sets of split document image data into the single set of document image data, which impairs usability.

Thus, when document image data is transmitted as multiple sets of split document image data, the output-destination-based document name generation unit 23a gives the same document name to all the sets of split document image data and generates document names that are given numerical values or symbols (e.g., serial numbers or serial symbols) indicating the sequence of the sets of split document image data in the original document image data according to the order in which the data sets are transmitted.

When a document name corresponding to the output rule applying unit 23c, the file name rule applying unit 23b, and the split document image data has been generated, the output-destination-based document name generation unit 23a passes the generated document name to the document name character string output unit 24.

The document name character string output unit 24 outputs the document name created by the character string adjustment unit 23 to the document storage unit 16.

In other words, in the document name creation unit 15 of the embodiment, the title candidate input unit 21 receives a title character string from the title creation unit 14 and passes it to the document name character string determination unit 22 and the document name character string determination unit 22 selects a document name candidate character string substantially representing the content of the document image data from the input title character string and then inputs the document name candidate character string to the character string adjustment unit 23.

In the character string adjustment unit 23, the output-destination-based document name generation unit 23a performs a split document image data document name giving process according to the output-destination-based character code etc. of the output-based rule applying unit 23c and the prohibition rules of the file name rule applying unit 23b, thereby properly carrying out the display and transmission and creating a document name with good usability.

The effects of the embodiment will be described. The document processing device 1 of the embodiment creates a document name representing the content of loaded document image data according to the output condition that are set according to document name output conditions.

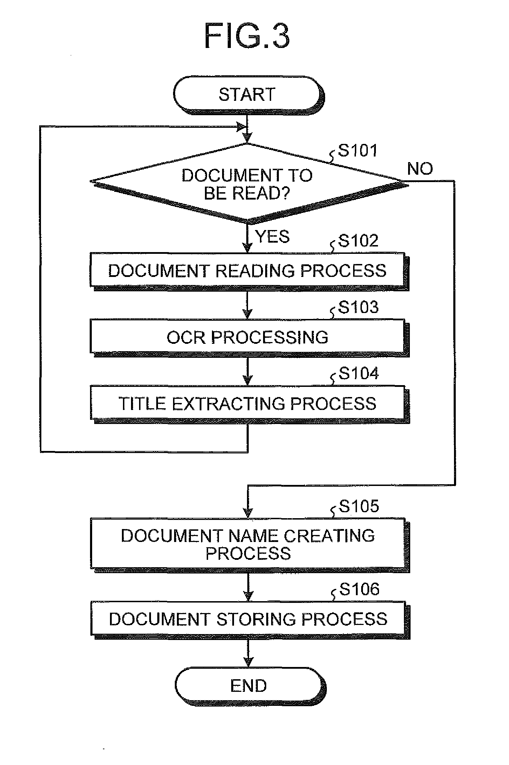

First, basic document processing performed by the document processing device 1 will be described with reference to FIG. 3. In the document processing device 1, as shown in FIG. 3, it is checked whether there is a paper document to be read on the document feed unit 11 (step S101). When there is a paper document on the document feed unit 11 (YES at step S101), only one page is sent from the document feed unit 11 to the document reading unit 12. The document reading unit 12 performs the document loading process for performing main scanning and sub scanning on the paper document to read the image on the paper document at a given resolution, binarizing the image, and outputting the image to the document storage unit 16 and the OCR unit 13 (step S102).

The OCR unit 13 performs a character information extracting process (OCR processing) for reading character data from the paper document image data read by the document reading unit 12, adding additional information, such as the character image position, character recognition score, and the language processing result (the position of words to which characters belong and grammatical information such as part of speech), to the character data, and outputting the character data to the title creation unit 14 (Step S103).

The title creation unit 14 perform the feature character string extracting process for extracting title character strings that are texts distinctively representing the content of the page of the document image data from the character data and additional information that are input from the OCR unit 13 and for outputting the title character strings to the document name creation unit 15 (step S104).

After performing 1-page document loading process, the character information extracting process, and the feature character string extracting process, the document processing device 1 returns to step S101 to check whether there is a paper document to be read on the document feed unit 11 (step S101). If there is a paper document to be read on the document feed unit 11, the document processing device 1 sequentially performs the document loading process, the character information extracting process, and the feature character string extracting process on the next paper document repeatedly as long as there is a paper document to be read (steps S101 to S104).

When there is no paper document to be read (NO at step S101), the document processing device 1 perform the document name creating process in which the document name creation unit 15 creates, as a document name, a character string complying with the pre-set output conditions from the title character strings created by the title creation unit 14, such as a character string complying with the character code, with the limitation on the number of characters for the outputting method, with the available character limitation etc. for the output destination, and outputs the character string to the document storage unit 16 (step S105).

The document storage unit 16 stores and manages the document image data that is input from the document reading unit 12 (if the data consists of multiple pages, the document image is a collection of multiple pages) in association with the document name that is crated by the document name creation unit 15 in the non-volatile memory.

In the document processing device 1, if the document image data consists of multiple pages in the document name creating process at step S105 performed by the document name creation unit 15, the document name creation unit 15 creates a more proper document name by using the results of extracting feature character strings from all pages.

When a document name for document image data consisting of multiple pages is created, it can be assumed that the title character string of the top page represents the whole document because the top page is normally supposed to be a front page, but the front page has a tendency different from that of pages of the body and if the front page is a page that cannot be properly processed into texts, e.g., if the document name is written by decorative lettering or the whole page is a picture with no character, a title character string cannot be acquired from the top page in the character information extracting process performed by the OCR unit 13. If a white paper is inserted as a bookmark, the OCR unit 13 cannot acquire title characters.

The title creation unit 14 totally evaluates a title from elements, such as the reliability of the result of the character information extracting process, the character size, and the character existing position to rank the title.

When the reliability of the character information extracting process performed by the OCR unit 13 is low, the value of evaluation on the results of extracting feature character strings also lowers.

The document name creation unit 15 thus uses the results of extracting feature character strings from all pages to sequentially perform, for example, a process in which the value of evaluation on the result of extracting a feature character string from each page is obtained and the evaluation value is compared with a given threshold from the top page and, if the evaluation value is lower than the threshold, the value of evaluation on the result of extracting a feature character string from the next page is compared with the threshold. If there is a page with the value of evaluation on the result of extracting a feature character string from the page exceeding the threshold, the document creation unit 15 uses the title character string from the page as a document name.

Accordingly, even if the character information extracting process functionality is low, a proper document name can be created.

In the document name creating process at step S105, the character string adjustment unit 23 of the document name creation unit 15 of the document processing device 1 creates a document name representing the content of document image data according to the document name output conditions as described above.

In other words, if the document processing device 1 performs any one of the above-described email sending, folder transmission, and electrical medium writing as the document image data outputting method, the document processing device 1 reads and digitizes (scans) a paper document, generate and gives a document name, and displays an output destination specifying screen for selecting or inputting an outputting method and an output destination on the display of an operation display unit to allow the user to specify an outputting method and an output destination.

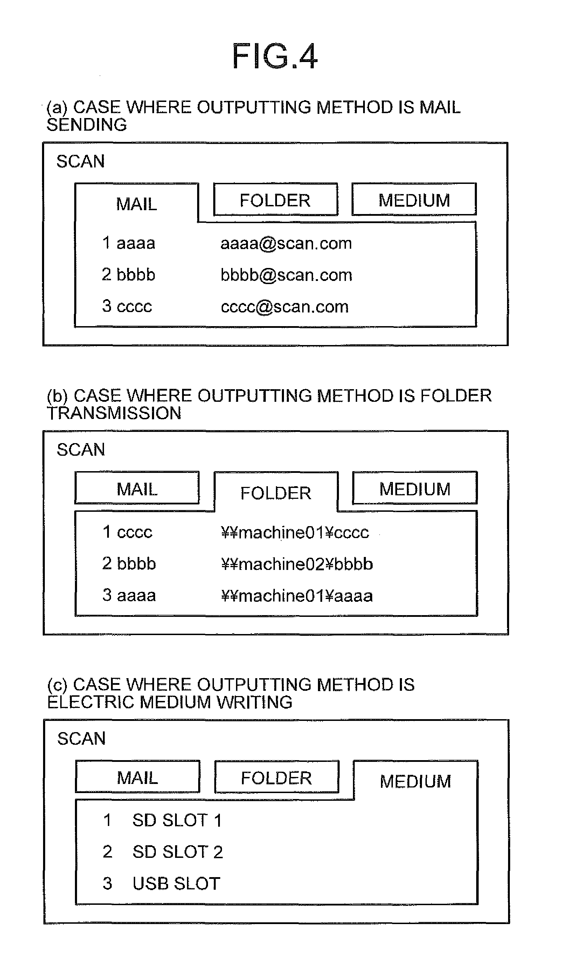

For example, FIG. 4(a) shows an output destination specifying screen where mail transmission is selected as the outputting method, FIG. 4(b) shows an output destination specifying screen here folder transmission is selected as the outputting method, and FIG. 4(c) shows an output destination specifying screen where electric medium writing is selected as the outputting method, respectively.

If the outputting method is electric medium writing, because the process ends in the document processing device 1, it is not necessary to take the character code into consideration and thus the character string adjustment unit 23 generates, as a document name, the title character string created by the title creation unit 14, i.e., the character string of the same character code as that of the document image data.

However, if the outputting method is email sending or folder transmission and if the title character string created by the title creation unit 14 is used as a document name, the document name may not be displayed accurately due to the character code or the length of characters of the document name depending on the output destination device. For this reason, as described above, the character string adjustment unit 23 acquires the character code usable in the output destination device that is previously stored as a character string regulation rule in the output-based rule applying unit 23c and creates a document name by changing it to t the document name character code or creates a document name by using the ASCII code that causes no character corruption.

The character string adjustment unit 23 reads prohibition rules, previously stored in the file name rule applying unit 23b, for performing a process for imposing a regulation on, if used in a document name, misidentification of a document name by the output destination device and limiting the character string and automatically replaces characters/symbols of the prohibition rules with alternative characters etc. or causes the user to change them.

Furthermore, the character string adjustment unit 23 acquires the regulation character string length, stored in the file name rule applying unit 23b, for regulating the length of character string serving as a document name and if a character string exceeds the regulation character string length, the character string adjustment unit 23 prohibits using the character string, automatically cuts off the last part of the document name candidate character string to the regulation character string length, and notifies the user of the fact to change the character string to a document name shorter than the regulation character string length.

Regarding email transmission, a limitation may be imposed on the data size of an attachment document depending on the software or the receiving device.

In such a case, the document processing device 1 splits the document image data to be transmitted into multiple sets of split document image data and transmits them by email and the receiving device restores the sets of split document image data to a single set of document image data.

However, when such sets of split document image data are transmitted by multiple emails and if the sets of split document image data that are attachment documents are respectively given different document names and transmitted, the receiving device has a difficulty in identifying the relationship between the split document image data when restoring the sets of split document image data into the single set of document image data, which impairs usability.

Thus, when document image data is transmitted as multiple sets of split document image data, the output-destination-based document name generation unit 23a gives the same document name to all the sets of split document image data and generates document names to which numerical values or symbols (e.g., serial numbers or serial symbols), indicating the sequence of the sets of split document image data in the original document image data, are given as sequence information according to the order in which the data sets are transmitted.

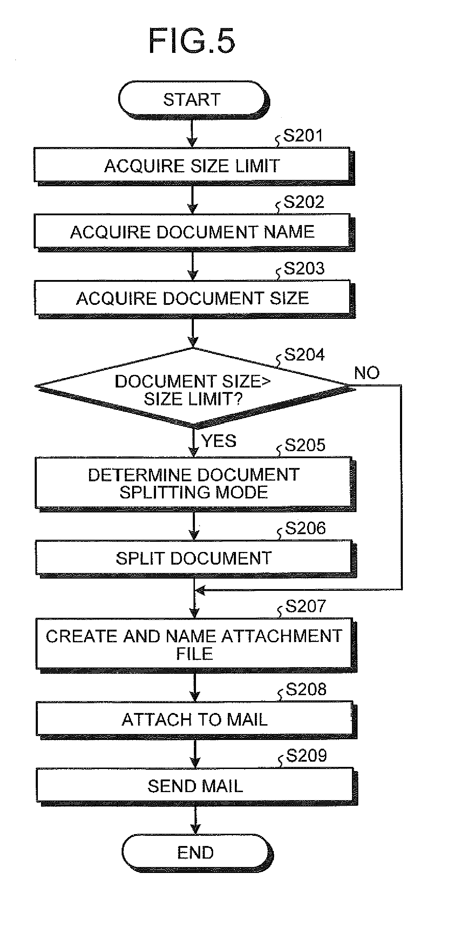

As shown in FIG. 5, when the outputting method is email sending, the character string adjustment unit 23 acquires the size limit for attachment document that is attached to an email (step S201), acquires the document name that is generated as described above (step S202), and acquires the document size of the document image data to be attached (step S203).

When the document size of the document image data has been acquired, the character string adjustment unit 23 compares it with the size limit to check whether the document size is larger than the size limit (step S204).

When the document size is larger than the size limit (YES at step S204), the character string adjustment unit 23 determines a document splitting mode (step S205) and splits the document image data by using the document splitting mode (step S206).

The character string adjustment unit 23 can use, as the document splitting mode, various types of splitting modes, such as a simple splitting mode algorithm for, for example, splitting the file into successive areas of uniform file length from the top; a splitting mode for splitting the data, on a page-by-page basis, such that the size limitation is not exceeded by using the page break; and a splitting method that is a combination of a dispersion file arrangement (successive areas are not put into one file but dispersed into multiple files) and a file compression algorithm. The character string adjustment unit 23 performs document division in the pre-set splitting mode or the splitting mode that is properly selected by the user from among such various types of splitting modes.

The character string adjustment unit 23 performs a process for creating an attachment file and naming the attachment file with a file name, i.e., when document image data has been split, the character string adjustment unit 23 creates multiple mails, attaches the sets of split document image data thereto according to the order in which they are transmitted, and gives file names to the sets of split document image data (step S207). The character string adjustment unit 23 gives the same name to all sets of split document image data and generates document names that are given sequence information, such as numerical values or symbols, that clarifies the sequence of the sets of split document image data to name them.

When the document size of the document image data is equal to or smaller than the size limit (NO at step S204), the character string adjustment unit 23 performs a process for creating an attachment file and naming it with a file names without splitting the document image data (step S207). When not splitting document image data, the character string adjustment unit 23 attaches the image data as an attachment file to an email and names the file using the document name as a file name.

The attachment file creation and naming process are, specifically, performed by the character string adjustment unit 23 and the document name character string output unit 24 cooperatively.

The document name character string output unit 24 attaches the attachment file named as described above to an email (step S208) and sends the email attached with the attachment file to a mail address and end the process (step S209). When the document image data is split, the document name character string output unit 24 sequentially transmits emails in the order indicated by the sequential information.

Accordingly, even for email sending, document names can be given for which the character code for the transmission destination is taken into consideration and, if there is a limitation on data volume, the document image data can be split into sets of document image data in a size equal to or smaller than the size limit, the same document names to which sequence information clarifying the sequence are given as file names to the data sets and the data sets can be sent by emails, the document names can be accurately displayed by the transmission destination device, and the original document image data can be restored accurately and easily.

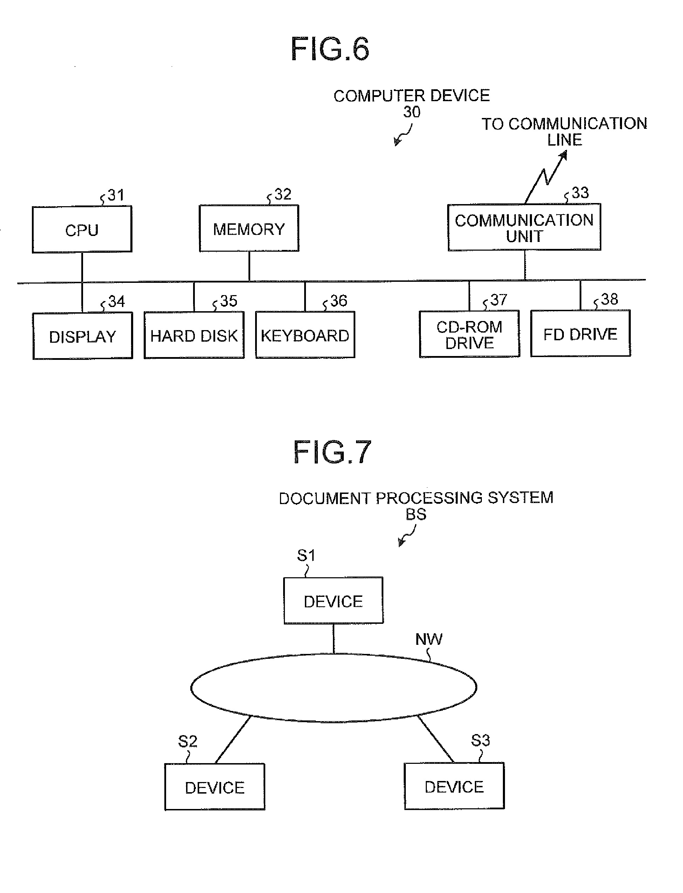

While the single document processing device 1 performs the processing from loading document image data to creating a document name and storing the document according to the above descriptions, the document processing is not limited to processing performed by the single document processing device 1. For example, for the document processing, document image data that is loaded by the document reading unit 12 may be transmitted to the computer device 30 shown in FIG. 6 and the computer device 30 may perform software processing to carry out document processing, such as the character information extracting process, feature character string extracting process, and document name creating process. In this case, the computer device 30 may also perform the document storing process.

The computer device 30 includes a CPU 31, a memory 32, a communication unit 33, a display 34, a hard disk 35, a keyboard 36, a CD-ROM drive 37, and a flexible disk (FD) drive 38. These units are interfaced via a bus 39. The document processing program of the invention is loaded to the hard disk 35, etc. of the computer device 30 so that the OCR unit, the title creation unit, the document name creation unit and, in a case where document storage is also performed, the document storage unit are created.

In the computer device 30, according to the document processing program loaded to the hard disk 35 etc., the CPU 31 creates a document name by performing document processing, such as the character information extracting process, feature character string extracting process, and document name crating process, on the document image data loaded by the communication unit 33 from a scanning device etc. via a communication line, such as a local area network (LAN) or the Internet, and stores the created document name in association with the document image data in the hard disk 35 or stores it in a CD-ROM inserted to the CD-ROM drive 37 or an FD inserted into the FD drive 38.

The document processing is not limited to one performed by a single device. For example, as shown in FIG. 7, a document processing system BS may be created by using multiple (three in FIG. 7) devices S1 to S3 that are connected to a communication line NW, such as the Internet or a LAN, to perform the document processing with the devices S1 to S3 by which the document processing system BS is created.

In this case, for example, the device S1 has a document processing program for the character information extracting process, performs the character information extracting process on document image data that is loaded from a different device or a scanning device (not shown) etc., or loaded by the device S1 by performing the scanning process, and transmits at least the result of the character information extracting process to the device S2 via the communication line NW.

The device S2 has a document processing program for creating a title, performs the feature character string extracting process according to the result of the character information extracting process, which is transmitted from the device S1, and transmits the title character strings resulting from the extraction to a device S3 via the communication line NW.

The device S3 has a document processing program for creating a document name, creates a document name from the title character strings transmitted from the device S2, and stores the document image data transmitted from the device S1 or the document image data transmitted from the device S2 in association with the document name in the non-volatile memory of the device 3 or in a storage device on the communication line NW.

As described above, the document processing device 1 includes the OCR unit (character information extracting unit) 13 that extracts character information from document image data; the title creation unit (feature character string extracting means) 14 that extracts, as title character strings (document name candidate character strings), a given number of character strings indicative of features of the document image data from the character information extracted by the OCR unit 13; the document name creation unit (output condition acquiring unit) 15 that, when the document image data is processed by one of multiple processing methods involving an output of a document name of the document image data, acquires an output condition required for the output of the document name of the document image data; and the document name creation unit (a document name generating unit) 15 that generates the document name complying with a character condition corresponding to the output condition from the document name candidate character strings.

Thus, the document name representing the content of document image data can be created by using a character string complying with the character condition appropriate for the output condition required for the outputting method used from when the document name is output to in a destination to which the document name is output and, accordingly, the document name can be output correctly in the output destination.

The document processing device 1 of the embodiment performs a document processing method including steps of: a character information extracting processing for extracting character information from document image data; a feature character string extracting processing for extracting, as document name candidate character strings, a given number of character strings indicative of features of the document image data from the character information that is extracted at the character information extracting processing step; an output condition acquiring processing for, when the document image data is processed by one of multiple processing methods involving an output of a document name of the document image data, acquiring an output condition required for the output of the document name of the document image data; and a document name generating processing for generating the document name complying with a character condition corresponding to the output condition from the document name candidate character strings.

Thus, the document name representing the content of document image data can be created by using a character string complying with the character condition appropriate for the output condition required for the outputting method used from when the document name is output to in a destination to which the document name is output and, accordingly, the document name can be output correctly in the output destination.

The document processing device 1 of the embodiment has a document processing program that causes a control processor to perform: a character information extracting processing for extracting character information from document image data; a feature character string extracting processing for extracting, as document name candidate character strings, a given number of character strings indicative of features of the document image data from the character information that is extracted by the character information extracting processing; an output condition acquiring processing for, when the document image data is processed by one of multiple processing methods involving an output of a document name of the document image data, acquiring an output condition required for the output of the document name of the document image data; and a document name generating processing for generating the document name complying with a character condition corresponding to the output condition from the document name candidate character strings.

Thus, the document name representing the content of document image data can be created by using a character string complying with the character condition appropriate for the output condition required for the outputting method used from when the document name is output to in a destination to which the document name is output and, accordingly, the document name can be output correctly in the output destination.

In the document processing device 1 of the embodiment, the document name creation unit 15 serving as an output condition acquiring unit acquires a character code as the output condition, and the document name creation unit 15 serving as a document name generating unit uses the character code, which is the output condition, as the character condition and generates the document name in the character code.

Accordingly, by using a character string in a character code appropriate to the output conditions when the document image data is output and in the destination to which the document image data is output from among title character strings consisting of a given number of character strings indicative of features of document image data, a document name representing the content of the document image data can be created according to the character code serving as the document name output condition and, accordingly, the document name can be output more accurately in the output destination.

In the document processing device 1 of the embodiment, when the document name creation unit 15 acquires an output condition that a destination to which the document name is output is storing in a storage media, the document name creation unit 15 uses, as the character condition, a character code that is used for the document image data and generate the document name in the character code.

Accordingly, for the processing completed in the document processing device 1, a character code that can be represented by the document processing device 1 can be used to generate a document name and, accordingly, the document name can be output accurately.

In the document processing device 1 of the embodiment, when the document name creation unit 15 acquires an output condition that the destination to which the document name is output by email sending or data transmission is a different device, the document name creation unit 15 generates a document name in an ASCII character code as the character condition.

Accordingly, even if a character code usable in a destination device to which the document name is output by email sending or data transmission is unknown, the document name can be output accurately.

Furthermore, in the document processing device 1, when the document name creation unit 15 acquires an output condition that a destination to which the document name is output by email sending is a different device and acquires a data volume limit for attachment document for the email sending as an output condition, the document name creation unit 15 generates, to sets of split document data that is obtained by splitting the document image data according to the data volume limit, a document name that are given the same name between the sets of split document data and to which sequence information representing sequence in a corresponding document.

Accordingly, even if it is necessary to split document image data when the document image data is transmitted as a document attached to an email, the document names can be accurately output in the output destination and document names can be given such that the relationship between the sets of split document image data can be understood, which improves usability.

According to an aspect of the embodiment, a document name representing the content of document image data can be created according to a document name output condition.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A document processing device (1) comprising:
a character information extracting unit (13) that extracts character information from document image data;
a feature character string extracting unit (14) that extracts, as document name candidate character strings, a given number of character strings indicative of features of the document image data from the character information extracted by the character information extracting unit (13);
an output condition acquiring unit (15) that, when the document image data is processed by one of multiple processing methods involving an output of a document name of the document image data, acquires an output condition required for the output of the document name of the document image data; and
a document name generating unit (15) that generates the document name complying with a character condition corresponding to the output condition from the document name candidate character strings.

2. The document processing device (1) according to claim 1, wherein
the output condition acquiring unit (15) acquires a character code as the output condition, and
the document name generating unit (15) uses the character code, which is the output condition, as the character condition and generates the document name using the character code.

3. The document processing device (1) according to claim 1 or 2, wherein
when the output condition acquiring unit (15) acquires an output condition that a destination to which the document name is output is storing in a storage media, the document name generating unit (15) uses, as the character condition, a character code that is used in the document image data and generate the document name using the character code.

4. The document processing device (1) according to claim 1 or 2, wherein
when the output condition acquiring unit (15) acquires an output condition that the destination to which the document name is output by email sending or data transmission is a different device, the document name generating unit (15) generates a document name using an ASCII character code as the character condition.

5. The document processing device (1) according to any one of claims 1 to 4, wherein
when the output condition acquiring unit (15) acquires an output condition that a destination to which the document name is output by email sending is a different device and acquires a data volume limit for attachment document for the email sending as an output condition, the document name generating unit (15) generates, to sets of split document data that is obtained by splitting the document image data according to the data volume limit, document names that are given the same name between the sets of split document data and to which sequence information representing sequence in a corresponding document is added.

6. An image processing apparatus in which a document image data is loaded, a document processor gives a document name to the document image data and stores the document name, and the document image data is output in response to a request to output the stored document image data, wherein
the document processing device (1) according to any one of claims 1 to 5 is mounted as the document processor.

7. A document processing method comprising steps of:
a character information extracting processing (S102, S103) of extracting character information from document image data;
a feature character string extracting processing (S104) of extracting, as document name candidate character strings, a given number of character strings indicative of features of the document image data from the character information that is extracted at the character information extracting processing step;
an output condition acquiring processing (S105) of, when the document image data is processed by one of multiple processing methods involving an output of a document name of the document image data, acquiring an output condition required for the output of the document name of the document image data; and
a document name generating processing (S105) of generating the document name complying with a character condition corresponding to the output condition from the document name candidate character strings.

8. A computer program product comprising a non-transitory computer-usable medium having computer-readable program codes embodied in the medium, wherein the program codes when executed cause a computer to execute:
a character information extracting processing (S102, S103) of extracting character information from document image data;
a feature character string extracting processing (S104) of extracting, as document name candidate character strings, a given number of character strings indicative of features of the document image data from the character information that is extracted by the character information extracting processing;
an output condition acquiring processing (S105) of, when the document image data is processed by one of multiple processing methods involving an output of a document name of the document image data, acquiring an output condition required for the output of the document name of the document image data; and
a document name generating processing (S105) of generating the document name complying with a character condition corresponding to the output condition from the document name candidate character strings.
